# EUROPÄISCHE PATENTSCHRIFT

(11) **EP 4 237 834 B1**
(45) Veröffentlichungstag und Bekanntmachung des Hinweises auf die Patenterteilung: **29.01.2025**
(21) Anmeldenummer: 21801503.0
(22) Anmeldetag: 27.10.2021
(51) Int. Cl.: G01B 11/02, G01N 29/07, G01N 29/44, G01B 5/02, G01N 21/95

(54) **AUTOMATISIERTE BEWERTUNG VON VERWENDETEN SCHRAUBEN**
AUTOMATED EVALUATION OF USED SCREWS
ÉVALUATION AUTOMATISÉE DE VIS USÉES

(30) Priorität: 30.10.2020 DE 102020213694
(43) Veröffentlichungstag der Anmeldung: 06.09.2023
(73) Patentinhaber: Fraunhofer-Gesellschaft zur Förderung der angewandten Forschung e.V., 80686 München (DE)
(72) Erfinder: STAMMLER, Matthias, 27572 Bremerhaven (DE)
(74) Vertreter: Pfenning, Meinig & Partner mbB
(86) Internationale Anmeldenummer: PCT/EP2021/079800
(87) Internationale Veröffentlichungsnummer: WO 2022/090303

(56) Entgegenhaltungen:
- US-A1- 2017 333 953
- VALENTINA DANESI ET AL: "Re-use of explanted osteosynthesis devices: A reliable and inexpensive reprocessing protocol", INJURY, JOHN WRIGHT AND SONS, BRISTOL, GB, vol. 42, no. 10, 8 February 2011 (2011-02-08), pages 1101 - 1106, XP028281257, ISSN: 0020-1383, [retrieved on 20110212], DOI: 10.1016/J.INJURY.2011.02.006

## Beschreibung

Die Erfindung betrifft ein Verfahren zur automatisierten Prüfung und Bewertung des Zustandes von Bauteilen, insbesondere von Schrauben, um als wiederverwendbar bewerteten Bauteile einer Wiederverwendung zuzuführen. Des Weiteren wird ein automatisiertes System zur Ausführung dieses Verfahrens beschrieben.

Der Artikel VALENTINA DANESI ET AL: "Re-use of explanted osteosynthesis devices: A reliable and inexpensive reprocessing protocol", INJURY, Bd. 42, Nr. 10, 8. Februar 2011, Seiten 1101-1106, XP028281257, ISSN: 0020-1383, DOI: 10.1016/J.INJURY.2011.02.006 offenbart die visuelle und taktile Prüfung von Bauteilen auf Wiederverwertbarkeit durch einen Menschen.

US 2017/333953 A1 offenbart eine optische Inspektion und Wirbelstromprüfung von Schrauben im Rahmen der Qualitätskontrolle bei der Herstellung.

Schrauben dienen in vielfältigen Anwendungsgebieten zur Verbindung von großen Maschinenteilen und müssen dabei hohen Anforderungen bezüglich ihrer Materialeigenschaften genügen. Nach VDI-Richtlinie 2230 sollten einmal verwendete Schrauben nicht erneut verbaut werden, müssen also stattdessen als Schrott verwertet und eingeschmolzen werden. Gerade bei Großprojekten, wie zum Beispiel bei Windenergieanlagen, in denen mehrere tausend große Schrauben verbaut sind, entstehen so hohe Kosten.

Erfahrungsgemäß ist jedoch ein gewisser Anteil von bereits verwendeten Schrauben durchaus zur sicheren Wiederverwendung geeignet. Dazu wird jedoch eine zuverlässige Bewertung des Schraubenzustandes, auch für eine große Stückzahl von Schrauben benötigt. Durch die so ermöglichte Wiederverwendung von Schrauben, oder auch anderen Bauteilen, wie zum Beispiel Bolzen oder Stifte, können die Kosten für technische Großprojekte deutlich reduziert werden.

Eine Aufgabe des Gegenstands der vorliegenden Schutzanmeldung ist es daher, ein Verfahren vorzuschlagen, das eine zuverlässige und sichere Bewertung der Wiederverwendbarkeit von Bauteilen auf Grund ihres durch Sensoren erfassten Zustands ermöglicht.

Diese Aufgabe wird durch ein Verfahren gemäß dem unabhängigen Anspruch 1 gelöst. Eine Vorrichtung, die dieses Verfahren automatisiert durchführt wird nach Anspruch 8 erreicht. Weitere vorteilhafte Ausführungsformen ergeben sich aus den abhängigen Ansprüchen.

Ein Verfahren zur automatisierten Prüfung der Wiederverwertbarkeit von Bauteilen, insbesondere Schrauben, umfasst folgende Schritte:
- sensorische Erfassung eines Zustandes eines Bauteils, wobei der Zustand des Bauteiles durch eine Vielzahl von Merkmalen beschrieben wird, die sensorische Erfassung erfolgend durch
   - optische Sensoren, die geometrische Maße des Bauteiles, äußere Schäden oder Verformungen des Bauteiles und einen Zustand einer etwaigen Beschichtung erfassen,
   - akustische Sensoren, die Schäden im Material und die Materialgüte erfassen, und
   - Spektrometer, die eine Materialzusammensetzung des Bauteils erfassen;
- Vergleich des Zustandes mit in einer Datenbank hinterlegten Zuständen von Vergleichsbauteilen;
- Entscheidung über eine Wiederverwendbarkeit des Bauteils auf Basis des Vergleichs des Zustandes mit in einer Datenbank hinterlegten Zuständen von Vergleichsbauteilen; und
- Aussortierung oder Zuführung zur Wiederverwendung des Bauteils auf Basis der Entscheidung.

Die sensorische Erfassung des Zustandes eines Bauteils erfolgt durch mehrere Sensoren, die jeweils zerstörungsfrei Daten über den Zustand des Bauteils erfassen. Dieses kann zum Beispiel durch optische Sensoren vermessen werden, es können äußere Schäden, Beschädigungen an Beschichtungen, Verformungen oder Risse im Material festgestellt werden. Durch akustische Sensoren, die auf Ultraschall oder akustischer Resonanz basieren, können durch Laufzeiten akustischer Signale, insbesondere in Kombination mit den optisch erfassten Maßen, Rückschlüsse auf Einschlüsse im Material oder Risse, die sich nicht an der Oberfläche befinden, gezogen werden. Durch ein Spektrometer kann die Materialzusammensetzung des Bauteiles bestimmt werden. So lässt sich die Materialgüte bestimmen und das Bauteil lässt sich mit einer vorgegebenen Spezifikation vergleichen. Im Zusammenspiel der Sensoren können so die wichtigsten Daten des zu prüfenden Bauteiles erfasst werden.

Diese Daten werden mit den erfassten Zuständen von Vergleichsbauteilen verglichen, die in einer Datenbank hinterlegt sind. Dabei können Algorithmen zum Einsatz kommen, die dem zu prüfenden Bauteil auf Grund seiner Daten ein oder mehrere Vergleichsbauteile mit möglichst großer Übereinstimmung zuordnen. Unterschiedliche Eigenschaften der Bauteile können dabei unterschiedlich stark berücksichtigt werden. Es können auch andere Methoden verwendet werden, um zum Beispiel Schnittmengen der erfassten Daten mit verschiedenen Vergleichsbauteilen zu bestimmen und auf diese Weise eine Entscheidung über die Wiederverwendbarkeit des geprüften Bauteils zu erhalten.

Die Datenbank, die für den Vergleich des sensorisch erfassten Zustandes des Bauteiles mit Vergleichsbauteilen herangezogen wird, kann dabei neben sensorisch erfassten Daten der Vergleichsbauteile insbesondere Informationen über deren Verwendbarkeit enthalten. Diese Informationen werden in praktischen Versuchen ermittelt. In solchen Versuchen werden bereits verwendete Bauteile in verschiedenen Zuständen und mit verschiedenen Abnutzungserscheinungen erneut in Testmaschinen verbaut und mechanisch belastet und kontrollierten Umwelteinflüssen, wie zum Beispiel Temperaturschwankungen oder Korrosion durch Salzwasser, ausgesetzt. Um eine langfristige Verwendung dieser Vergleichsbauteile zu simulieren, können die Versuche unter beschleunigten Bedingungen stattfinden. Das Verhalten der Vergleichsbauteile wird erfasst und in Bezug auf die Möglichkeit einer sicheren Weiterverwendung des Vergleichsbauteils bewertet. Diese Bewertung wird in der Datenbank zusammen mit dem erfassten Zustand hinterlegt und dient dann zur Bewertung der zu prüfenden Bauteile.

Zusätzlich zu den bereits beschriebenen Sensoren kann die sensorische Erfassung des Verfahrens über Tastsensoren erfolgen. Diese erfassen, ähnlich wie die optischen Sensoren, ebenfalls die geometrischen Maße des zu prüfenden Bauteiles, können allerdings eine höhere Genauigkeit aufweisen. Auf diese Weise lassen sich auch kleinste Abweichungen von den Sollwerten des Bauteiles erfassen, wie zum Beispiel die Verjüngung eines Schafts einer Schraube durch Lasteinwirkung.

Um die sensorische Erfassung so zuverlässig wie möglich zu gestalten, kann das Verfahren außerdem eine automatisierte Reinigung der zu prüfenden Bauteile als ersten Prozessschritt umfassen. Eine solche Reinigung ist zum Beispiel durch einen Durchlauf durch ein Reinigungsbad oder eine Ultraschallreinigung vorstellbar.

Sollte eine sensorische Erfassung des Bauteiles nicht möglich sein, oder ein Vergleich mit in der Datenbank hinterlegten Zuständen nicht erfolgreich sein, so kann das Bauteil aussortiert werden. Insbesondere kann es dabei markiert werden, um später eine manuelle Prüfung zu erfahren und/oder einem praktischen Versuch zur Bestimmung seiner Verwendbarkeit, wie bereits beschrieben zugeführt zu werden. Auf diese Weise kann die Datenbank um zuvor fehlenden Informationen erweitert werden.

Auch bei einer erfolgreichen Prüfung und Bewertung eines Bauteils kann die Datenbank anschließend um die erfassten Daten des Bauteils erweitert werden. Da es sich bei dieser Erweiterung nur um die sensorisch erfassten Daten, sowie die aus dem Vergleich gewonnene Bewertung über die Verwendbarkeit des Bauteils handeln kann, können diese Daten natürlich keine abschließenden Informationen über die langfristige sichere Verwendbarkeit des Bauteils liefern und werden daher bei der Bewertung weiterer Bauteile nur als sekundäre Quellen herangezogen. Eine vollständige Erfassung der Daten eines Bauteils für die Datenbank inklusive der Information über die sichere Verwendbarkeit ist nur möglich, wenn das Bauteil nach der automatisierten Prüfung weiter verfolgt wird.

Um eine Rückverfolgung eines geprüften Bauteils zu ermöglichen, kann das beanspruchte Verfahren weiterhin einen Schritt umfassen, in dem Bauteile, die erfolgreich geprüft, und als sicher zur Weiterverwendung bewertet wurden, mit einer Markierung versehen werden, die eine Rückverfolgung erlaubt. Eine solche Markierung könnte beispielsweise ein QR- oder Barcode sein. Zum Markieren der Bauteile können beispielsweise Nadel-, Ritz-, oder Lasermarkierverfahren verwendet werden. Die Markierung erlaubt bei einer späteren Prüfung oder Überwachung des Bauteiles in seiner Benutzung, eine neu gewonnene Bewertung über seine langfristige Verwendbarkeit den sensorisch erfassten Daten aus dem automatisierten Prüfungsprozess zuzuordnen und so die Datenbank um weitere praktisch gewonnene Informationen über die Verwendbarkeit des Bauteils zu erweitern.

Um das beschriebene Verfahren auszuführen, wird weiterhin eine Vorrichtung beansprucht, die dazu ausgelegt ist, das Verfahren automatisch auszuführen.

Eine solche Vorrichtung zur automatisierten Prüfung der Wiederverwertbarkeit von Bauteilen, insbesondere Schrauben, umfasst
eine abgeschlossene Prüfkammer, in der sich die Umgebungsbedingungen wie Beleuchtung und Temperatur bestimmen lassen,
einen Zuführmechanismus, über den ein Bauteil in die Prüfkammer und in dieser von einem Sensor zum nächsten transportiert wird, mehrere Sensoren, durch die der Zustand des Bauteiles erfasst wird, davon mindestens
   ein optischer Sensor,
   ein akustischer Sensor, und
   ein Spektrometer,
eine Bewertungseinheit, die ausgebildet ist, den Zustand des Bauteiles mit in einer Datenbank hinterlegten Zuständen von Vergleichsbauteilen zu vergleichen, und
einen Sortiermechanismus, über den bewertete Bauteile aussortiert oder der Wiederverwendung zugeführt werden können.

Da sich das System in einer abgeschlossenen Kammer befindet, ermöglicht dies eine präzise Erfassung der Zustände von Prüfteilen, da zum Beispiel optische Sensoren auf gleichbleibende Lichtverhältnisse angewiesen sind, um vergleichbare Daten zu liefern, und die Verwendung von akustischen Sensoren definierte, gleichbleibende Temperaturen erfordert.

Als Zuführ- und Transportmechanismus der Vorrichtung kann zum Beispiel ein Förderband geeignet sein, aber auch andere Umsetzungen, wie Roboterarme, Rollenförderer oder ähnliche sind vorstellbar. Der Zuführ- und Transportmechanismus kann außerdem dazu ausgelegt sein, dass zu prüfende Bauteil für die Prüfung zu positionieren und, wenn nötig, zu drehen. Des Weiteren kann ein Zuführ- und Transportmechanismus geeignet sein, Daten, wie zum Beispiel das Gewicht, eines zu prüfenden Bauteils zu erfassen.

Bei der Bewertungseinheit kann es sich zum Beispiel um einen Rechner handeln, der Zugang zu einer Datenbank von Vergleichsbauteilen und ihren Zuständen hat und ein Programm zum Vergleich der erfassten Zustände mit den hinterlegten Zuständen ausführt. Es sind jedoch auch andere Ausführungsformen, wie spezialisierte Schaltkreise oder vernetzte Systeme für diese Aufgabe denkbar.

Die Datenbank kann in dieser Vorrichtung neben rein sensorisch erfassten Daten der Vergleichsbauteile auch Informationen über deren Verwendbarkeit enthalten, die in praktischen Versuchen, wie bereits beschrieben, ermittelt wurden.

Die Vorrichtung kann weiterhin einen Tastsensor umfassen. Dieser kann die geometrischen Maße des Bauteils und etwaige Abweichungen der Abmessungen des Bauteils von den Sollwerten präzise erfassen.

Die Vorrichtung kann außerdem eine automatisierte Reinigungsvorrichtung umfassen. Eine solche kann beispielsweise ein Reinigungsbad sein, durch das der Zuführmechanismus, beispielsweise in Form eines Förderbandes, die zu prüfenden Bauteile transportiert, bevor sie den Sensoren zugeführt werden. Um eine möglichst effiziente Prüfung der Bauteile zu ermöglichen, sollte der Zuführmechanismus dazu konfiguriert sein, die Prüfung einer großen Stückzahl von Bauteilen zu ermöglichen. Dies ist insbesondere bei der Prüfung von Schrauben relevant, die in großen Stückzahlen verbaut werden. Eine einfache technische Lösung, die den Transport großer Stückzahlen von Bauteilen ermöglicht, ist die Verwendung eines Förderbands.

Des Weiteren können Zuführmechanismus und Sortiermechanismus so ausgelegt sein, Bauteile, deren Zustand auf Grund von Verschmutzung oder unbekannten Einflüssen nicht von einem Sensor erfasst werden kann, direkt nach diesem Sensor auszusortieren. Auf diese Weise lassen sich eine Vorsortierung der zu prüfenden Bauteile und damit auch eine insgesamt schnellere und effizientere Prüfung der Bauteile erreichen.

Zusätzlich kann die beanspruchte Vorrichtung eine Apparatur zu Markierung der der Wiederverwendung zugeführten Bauteile umfassen. Eine solche Apparatur kann beispielsweise ein Gerät zur Nadelmarkierung, Ritzmarkierung oder Lasermarkierung sein. Wie bereits beschrieben erlaubt eine Markierung der geprüften Bauteile eine Rückverfolgung der Bauteile, sowie eine nachträgliche Erweiterung der Datenbank bezüglich der langfristigen Verwendbarkeit der Bauteile.

Die beschriebenen Ausführungsformen der Gegenstände der vorliegenden Anmeldung können dabei sowohl einzeln verwendet als auch kombiniert werden, um zusätzliche Effekte zu erzielen und ein zuverlässiges und sicheres Verfahren zur Bewertung der Wiederverwendbarkeit von Bauteilen, insbesondere Schrauben, sowie eine Vorrichtung zu Ausführung dieses Verfahrens, zu erbringen.

Die erwähnten, sowie weitere Aspekte der Erfindung werden ersichtlich anhand der detaillierten Beschreibung der Ausführungsbeispiele, die mit Hilfe der folgenden Zeichnungen gegeben wird, von welchen:
Fig. 1 ein Flussdiagramm des Ablaufs des beanspruchten Verfahrens zeigt,
Fig. 2 eine schematische Darstellung einer Ausführungsform einer Vorrichtung zur automatischen Prüfung der Wiederverwendbarkeit von Schrauben ist, und
Fig. 3 eine schematische Darstellung einer weiteren Ausführungsform einer Vorrichtung zur automatischen Prüfung der Wiederverwendbarkeit von Schrauben ist.

Im Folgenden soll das beanspruchte Verfahren sowie der beanspruchte Gegenstand auf Basis der begleitenden Zeichnungen näher erläutert werden. Dabei beziehen sich gleiche Bezugszeichen auf gleiche Elemente.

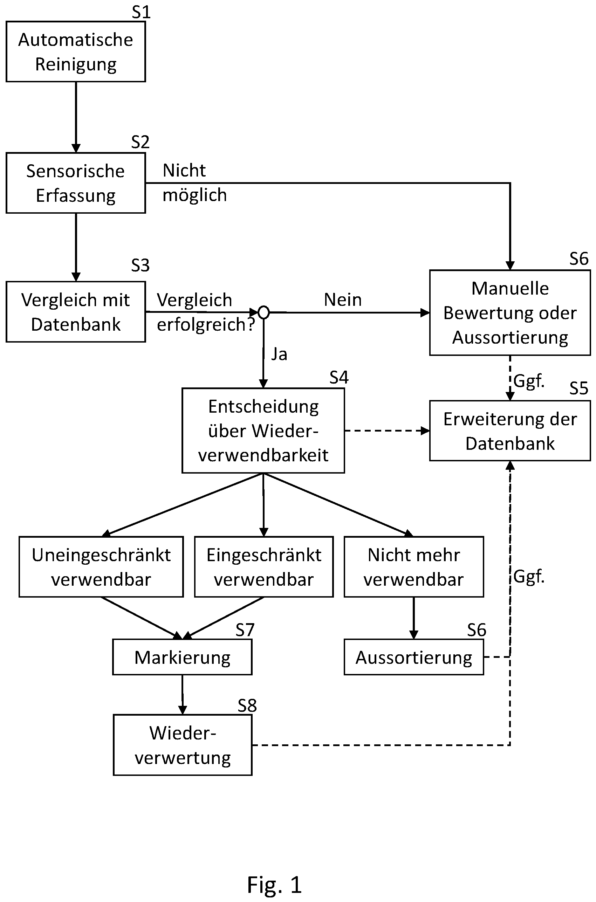

In Fig. 1 ist das gesamte Verfahren in seinen einzelnen Verfahrensschritten dargestellt. Um eine problemlose und zuverlässige sensorische Erfassung des Zustandes eines Bauteiles zu gewährleisten, wird dieses in Verfahrensschritt S1 zunächst automatisch gereinigt. Dies kann beispielsweise durch ein Reinigungsbad geschehen, durch das die zu prüfenden Bauteile automatisch transportiert werden. Auf diese Weise werden etwaige Verschmutzungen der Oberfläche oder Rückstände von Schmiermitteln entfernt, die die folgende sensorische Erfassung S2 beinträchtigen könnten.

In Verfahrensschritt S2 erfolgt die eigentliche sensorische Erfassung des Bauteils. Dabei werden mindestens drei verschiedene Sensoreinheiten, namentlich ein optischer Sensor, ein akustischer Sensor und ein Spektrometer, verwendet. Zusätzlich kann ein Tastsensor verwendet werden. Alle verwendeten Sensoren führen dabei zerstörungsfreie Messungen durch. Am Beispiel von Schrauben können dabei folgende Messungen durchgeführt werden: Durch optische Sensoren können die Schrauben vermessen werden, es können äußere Schäden am Gewinde, Beschädigungen der Beschichtung, Verformungen des Schraubenschafts und Risse im Material festgestellt werden. Tastsensoren erfassen ebenfalls die geometrischen Maße der Schrauben, weisen dabei jedoch in der Regel eine höhere Genauigkeit als optische Sensoren auf und können so auch kleinste Abweichungen, wie sie beispielsweise an einem Schaft einer Schraube unter Last auftreten können, erfassen. Durch akustische Sensoren, die auf Ultraschall oder akustischer Resonanz basieren, können durch Laufzeiten akustischer Signale durch die Schraube Rückschlüsse auf Einschlüsse im Material oder Risse, die sich nicht an der Oberfläche befinden, gezogen werden. Durch ein Spektrometer kann die Materialzusammensetzung der Schraube bestimmt werden. Auch wenn dieser Verfahrensschritt hier explizit für Schrauben beschrieben ist, so lässt er sich auch auf andere Bauteile in nahezu unveränderter Form anwenden, wobei die genauen Abläufe möglicherweise für die jeweiligen Geometrien angepasst werden müssen.

Im Zusammenspiel der Sensoren können so die wichtigsten Daten des zu prüfenden Bauteiles erfasst werden. Die Erfassung des Bauteils durch diese Sensoren kann dabei in einer beliebigen Reihenfolge oder, zumindest teilweise, auch gleichzeitig stattfinden. Besonders vorteilhaft kann es beispielsweise sein, wenn die Vermessung der Geometrie des Bauteils durch einen optischen Sensor vor Untersuchung des Bauteils mit Ultraschall erfolgt, da eine Laufzeitmessung der Ultraschallsignale Informationen über die Abmessungen des Bauteils benötigt, um Aussagen über Materialeigenschaften zu treffen.

Kann eine sensorische Erfassung auf Grund einer verbleibenden Verschmutzung, einer zu starken Beschädigung des Bauteils oder aus einem anderen Grund nicht erfolgen, so besteht schon hier die Möglichkeit S6 das Bauteil auszusortieren, sodass es weitere Verfahrensschritte nicht mehr durchlaufen muss. Sollten die verschiedenen Erfassungen durch die Sensoren nacheinander erfolgen, so muss das Bauteil in einem solchen Fall auch nicht alle Sensoren durchlaufen, bevor es aussortiert wird.

In Verfahrensschritt S3 wird ein Vergleich des erfassten Zustands des zu prüfenden Bauteils mit einer Datenbank durchgeführt. Diese enthält die Zustände von Vergleichsbauteilen, die durch Sensoren der gleichen Art und unter denselben Bedingungen erfasst wurden.

Zusätzlich enthält die Datenbank für jedes der Vergleichsbauteile eine Bewertung seiner Verwendbarkeit. Diese wurde jeweils in speziellen praktischen Versuchen gewonnen. Bei den Vergleichsbauteilen handelt es sich um bereits verwendete Bauteile in verschiedenen Zuständen, die erneut verbaut wurden und daraufhin verschiedenen Belastungen ausgesetzt wurden. Dazu gehören neben mechanischen Belastungen, die das Bauteil in seiner herkömmlichen Verwendung erfahren würde, auch Belastungen durch Umweltbedingungen, wie Temperaturschwankungen, Korrosion und ähnliches. Diese Belastungen können in einer beschleunigten Form erfolgen, um eine langfristige Nutzung des Vergleichsbauteils zu simulieren. Das Verhalten des Vergleichsbauteils wird während des Versuchs beobachtet und sein Zustand danach erneut erfasst, um zu bestimmen, ob das Bauteil noch immer den Ansprüchen einer sicheren Verwendbarkeit entspricht. Auf dieser Basis wird dem Vergleichsbauteil eine Bewertung auf einer Skala von "uneingeschränkt verwendbar" bis "nicht mehr verwendbar" zugewiesen.

Im Vergleichsschritt S3 wird versucht dem sensorisch erfassten Zustand des Bauteils eine möglichst große Übereinstimmung des in der Datenbank von Zuständen von Vergleichsbauteilen zuzuordnen. Dazu werden durch einen Algorithmus die einzelnen, sensorisch erfassten Eigenschaften des Bauteils verglichen. Zu diesen Eigenschaften zählen geometrische Maße des Bauteils, äußere Abnutzungserscheinungen wie zum Beispiel Verformungen, abrasive Verschleißerscheinungen oder Anzeichen für Korrosion und Materialermüdung, Beschädigungen in bestimmten Bereichen des Bauteils sowie an etwaigen Beschichtungen, und Anzeichen für interne Veränderungen des Bauteils, wie Einschlüsse, unsichtbare Risse oder Änderungen der Materialzusammensetzung.

Sollte ein Vergleich nicht möglich sein oder bleibt die Übereinstimmung unterhalb einer bestimmten Grenze, so wird das Bauteil in Verfahrensschritt S6 aussortiert oder einer manuellen Bewertung zugeteilt. Es ist auch möglich, dass ein solches Bauteil für bereits beschriebene praktische Versuche als Vergleichsbauteil verwendet wird, um weitere Daten zur Verwendbarkeit für die Datenbank zu gewinnen.

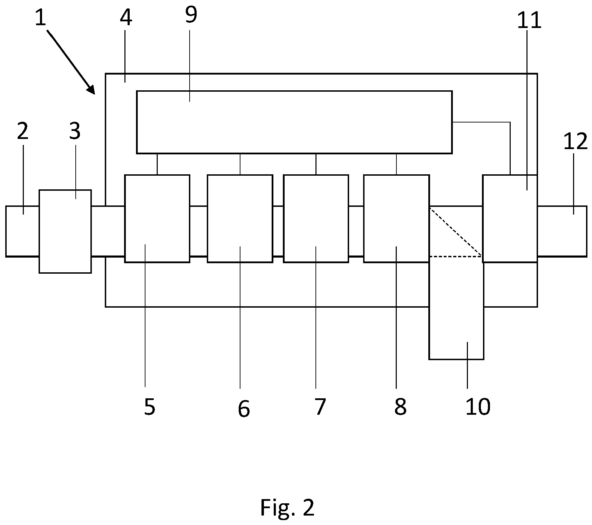

Überschreitet die Übereinstimmung des Zustandes des Bauteils mit dem in der Datenbank hinterlegten Zustand eines Vergleichsbauteils oder Zuständen mehrerer Vergleichsbauteile eine festgelegte Grenze, so ist der Vergleich erfolgreich. Bei einem erfolgreichen Vergleich wird das Verfahren in Schritt S4 fortgesetzt, in dem eine Entscheidung über die Wiederverwendbarkeit des Bauteils getroffen wird. Diese wird auf Basis der Information über die Verwendbarkeit, die für das Vergleichsbauteil oder die mehreren Vergleichsbauteile mit der größten Übereinstimmung in der Datenbank hinterlegt ist, getroffen. Dem Bauteil wird somit ebenfalls eine Bewertung zugewiesen, in der in Fig. 2 gezeigten Ausführungsform wir es einer der drei Kategorien "Uneingeschränkt verwendbar", "Eingeschränkt verwendbar" oder "Nicht mehr verwendbar" zugeordnet. Es ist jedoch auch möglich, eine detailliertere Bewertung zuzuweisen, beispielweise nach Eignung für bestimmte Verwendungszecke oder nach dem Zeitrahmen, in welchem das Bauteil weiterverwendet werden kann.

Wurde entschieden, dass das Bauteil in irgendeiner Form wiederverwendet werden kann, so wird es dieser Wiederverwendung S8 zugeführt. Kann es nicht wiederverwendet werden, so wird es wiederum aussortiert S6.

Parallel zu den Verfahrensschritten S4, S6, und S8 kann jeweils eine Erweiterung der Datenbank S5 stattfinden. Die gestrichelten Pfeile in Fig. 1 sollen dabei anzeigen, dass zu diesem Schritt nicht das Bauteil weitergegeben wird, sondern die Daten über den erfassten Zustand des Bauteils. In diesem Schritt wird der erfasste Zustand des Bauteils ebenfalls in der Datenbank hinterlegt, sodass dieses für spätere Bewertungen als Vergleichsbauteil dienen kann. Zusätzlich zu diesen Daten können in der Datenbank auch weitere Daten hinterlegt werden, wie im Falle von Schrauben Höchstlasten und Informationen die für das Anziehen der Schrauben erforderlich sind. Es ist jedoch anzumerken, dass für diese neuen Vergleichsbauteile in der Datenbank zunächst die Information über die Verwendbarkeit des Bauteils nicht gesichert ist, da diese noch nicht praktisch bestätigt ist. Im Falle eines aussortierten Bauteils lässt sich diese Bewertung gewinnen, indem es, anstatt der Verschrottung zugeführt zu werden, für praktische Versuche zur Verwendbarkeit genutzt wird.

Für Bauteile, die direkt wiederverwendet werden sollen, gestaltet sich dieser Schritt S5 schwieriger und erfordert die Möglichkeit der Rückverfolgung des Bauteils auch nach längerer Wiederverwendung. Um dies zu ermöglichen, können die als wiederverwendbar eingestuften Bauteile in einem Verfahrensschritt S7 markiert werden. Als Markierung kann zum Beispiel ein Barcode, ein QR-Code oder eine andere maschinenlesbare Markierung verwendet werden, die mittels Ritzen, Nadelprägung, Lasermarkierung oder einem anderen Markierungsverfahren auf ein Bauteil aufgebracht werden kann. Eine solche Markierung sollte dabei dauerhaft haltbar und gegenüber den für das Bauteil relevanten Umgebungseinflüssen nicht anfällig sein. Auf diese Weise kann das Bauteil auch nach längerer Wiederverwendung zurückverfolgt werden, und eine nachträgliche Bewertung über seine Verwendbarkeit kann ergänzt werden.

In Fig. 2 ist eine Vorrichtung 1 zur Ausführung des beschriebenen Verfahrens schematisch und stark vereinfacht dargestellt. Es handelt sich um eine Ausführung, in der die zu prüfenden Bauteile, in diesem Fall Schrauben, über ein Förderband 2 auf der linken Seite der Figur in die Vorrichtung 1 eingeführt werden und zunächst ein Reinigungsbad 3 durchlaufen. Danach werden die Schrauben in den eigentlichen Hauptteil der Vorrichtung transportiert, der sich in einer abgeschlossenen Prüfkammer 4 befindet. Da die Prüfkammer 4 von der Umgebung abgetrennt ist, können in ihr Bedingungen wie Temperatur und Beleuchtung kontrolliert und konstant gehalten werden, so dass die Sensoren verlässliche und vergleichbare Ergebnisse liefern. In der gezeigten Ausführungsform durchlaufen die zu prüfenden Schrauben mehrere Prüfungsstationen, eine Station mit optischen Sensoren 5, eine Station für Tastsensoren 6, eine Station mit akustischen Sensoren 7 und eine Station, die ein Spektrometer beinhaltet 8. Das Förderband 2 ist im Bereich der Prüfstationen so gestaltet, dass die zu prüfenden Schrauben zur Erfassung durch die jeweiligen Sensoren positioniert und ausgerichtet werden. Die Prüfstationen 5, 6, 7 und 8 senden die erfassten Daten an eine Bewertungseinheit 9. Bei dieser handelt es sich um einen Computer, der Zugang zu einer Datenbank von Zuständen von Vergleichsbauteilen hat und ein Programm zum Vergleich und zur Bewertung der Bauteile ausführt. Nach dem oben beschriebenen Verfahren wird die zu prüfende Schraube, nachdem sie die letzte Prüfungsstation 8 durchlaufen hat und somit vollständig sensorisch erfasst wurde, in der Bewertungseinheit 9 mit den in der Datenbank hinterlegten Zuständen der Vergleichsbauteile verglichen und auf dieser Basis ihre Wiederverwendbarkeit bewertet. Wird sie als nicht mehr verwendbar eingestuft, so wird sie über den Sortiermechanismus 10 aussortiert. Wird die Schraube als verwendbar eingestuft, so wird sie zu der Apparatur zu Markierung 11 transportiert. Bei dieser kann es sich um ein Gerät zur Ritz-, Nadel- Lasermarkierung oder eine sonstige Vorrichtung zur Markierung handeln. Da es in dieser Ausführung um die Prüfung und Bewertung von Schrauben geht, muss die Markierung auf einer kleinen Fläche aufgebracht werden können, wozu sich zum Beispiel ein QR-Code eignet. Die Apparatur 11 wird von der Bewertungseinheit 9 mit den für die Rückverfolgung der Schrauben notwendigen Daten versorgt. Die so markierten Schrauben verlassen die Prüfkammer 4 und können vom Ausgang der Vorrichtung 12 einer Wiederverwendung zugeführt werden. In Fig. 2 nicht gezeigt ist, dass am Ausgang 12 eine weitere Sortierung stattfinden kann, wenn die als verwendbar eingestuften Schrauben zusätzlich nach weiteren Kriterien, wie Materialqualität, Dauer der Verwendbarkeit oder Verwendungszweck bewertet wurden.

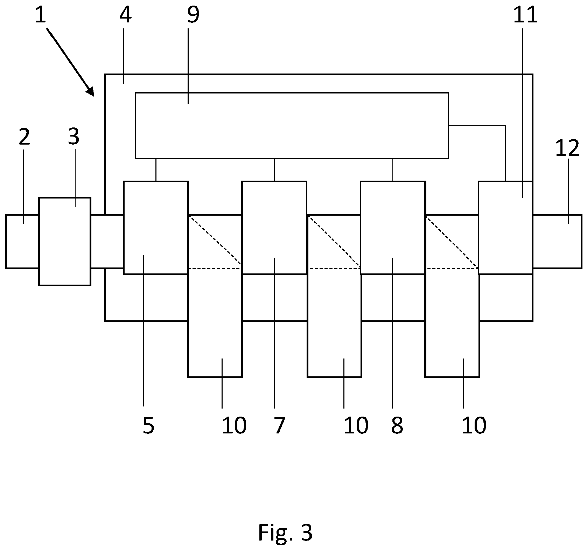

In Fig. 3 ist eine ähnliche Vorrichtung zur Prüfung von Schrauben gezeigt. Anders als in Fig. 2 nutzt diese Ausführungsform nur drei verschiedene Sensoren, in diesem Fall optische und akustische Sensoren und ein Spektrometer. Außerdem ist der Sortiermechanismus 10 hier dazu ausgelegt, Schrauben, die von einem Sensor nicht erfasst werden können, direkt nach diesem Sensor auszusortieren. Auf diese Weise müssen Bauteile, die beispielsweise schon eine optische Prüfung aufgrund von Verschmutzung oder starker Beschädigung nicht bestehen, nicht die gesamte sensorische Erfassung durchlaufen, wodurch sich die Stückzahl der geprüften Schrauben pro Zeitabschnitt erhöhen lässt. Diese Ausführungsform ist natürlich auch mit weiteren Sensoren denkbar. Ebenso ist es möglich, dass der Sortiermechanismus nur dazu ausgelegt ist, nach einem oder mehreren der Sensoren, beispielsweise nur nach dem optischen Sensor, auszusortieren.

Die hier gezeigten Ausführungsbeispiele sind nicht begrenzend. Insbesondere können die Merkmale dieser Ausführungsbeispiele miteinander kombiniert werden, um zusätzliche Effekte zu erzielen. Für den Fachmann ist offensichtlich, dass Änderungen an diesen Ausführungsbeispielen vorgenommen werden können, ohne den Gegenstand der Erfindung zu verlassen, dessen Bereich in den Ansprüchen definiert ist.

## Patentansprüche

1. Verfahren zur automatisierten Prüfung der Wiederverwertbarkeit von Bauteilen, insbesondere Schrauben, welches folgende Schritte umfasst:
sensorische Erfassung eines Zustandes eines Bauteils (S2), wobei der Zustand des Bauteiles durch eine Vielzahl von Merkmalen beschrieben wird, die sensorische Erfassung erfolgend durch
optische Sensoren, die geometrische Maße des Bauteiles, äußere Schäden oder Verformungen des Bauteiles und/oder einen Zustand einer etwaigen Beschichtung erfassen,
akustische Sensoren, die Schäden im Material und die Materialgüte erfassen, und
Spektrometer, die eine Materialzusammensetzung des Bauteils erfassen;
Vergleich des Zustandes mit in einer Datenbank hinterlegten Zuständen von Vergleichsbauteilen (S3);
Entscheidung über eine Wiederverwendbarkeit des Bauteils (S4) auf Basis des Vergleichs des Zustandes mit in einer Datenbank hinterlegten Zuständen von Vergleichsbauteilen; und
Aussortierung (S6) oder Zuführung zur Wiederverwendung des Bauteils (S8) auf Basis der Entscheidung.

2. Verfahren nach Anspruch 1, **dadurch gekennzeichnet, dass** für den Vergleich des Zustandes eines Bauteils mit in einer Datenbank hinterlegten Zuständen von Vergleichsbauteilen die Datenbank neben sensorisch erfassbaren Daten der Vergleichsbauteile Informationen über deren Verwendbarkeit enthält, die in praktischen Versuchen ermittelt wurden.

3. Verfahren Anspruch 1 oder 2, **dadurch gekennzeichnet, dass** die sensorische Erfassung zusätzlich durch Tastsensoren, die geometrische Maße sowie Verformungen des Bauteils erfassen, erfolgt.

4. Verfahren nach einem der vorhergehenden Ansprüche, **dadurch gekennzeichnet, dass** das Bauteil vor der sensorischen Erfassung automatisiert gereinigt wird (S1).

5. Verfahren nach einem der vorhergehenden Ansprüche, **dadurch gekennzeichnet, dass**, falls ein Vergleich mit in der Datenbank hinterlegten Zuständen nicht möglich ist, das Bauteil aussortiert (S6) und/oder für einen praktischen Versuch zur Verwendbarkeit markiert wird.

6. Verfahren nach einem der vorhergehenden Ansprüche, **dadurch gekennzeichnet, dass** nach der Entscheidung über die Wiederverwertbarkeit des Bauteils die Datenbank um den sensorisch erfassten Zustand des Bauteils erweitert wird (S5).

7. Verfahren nach einem der vorhergehenden Ansprüchen, **dadurch gekennzeichnet, dass** ein Bauteil, das der Wiederverwendung zugeführt wird, mit einer Markierung zur Rückverfolgung (S7) versehen wird.

8. Vorrichtung zur automatisierten Prüfung der Wiederverwertbarkeit von Bauteilen (1), insbesondere Schrauben, umfassend
eine abgeschlossene Prüfkammer (4), in der sich die Umgebungsbedingungen wie Beleuchtung und Temperatur bestimmen lassen,
einen Zuführmechanismus (2), über den ein Bauteil in die Prüfkammer (4) und in dieser von einem Sensor (5, 6, 7) zum nächsten transportiert wird,
mehrere Sensoren (5, 6, 7) durch die der Zustand des Bauteiles erfasst wird, davon mindestens
ein optischer Sensor (5),
ein akustischer Sensor (6), und
ein Spektrometer (7),
eine Bewertungseinheit (8), die ausgebildet ist, den Zustand des Bauteiles mit in einer Datenbank hinterlegten Zuständen von Vergleichsbauteilen zu vergleichen, und
einen Sortiermechanismus (9), über den bewertete Bauteile aussortiert oder der Wiederverwendung zuführbar sind.

9. Vorrichtung nach Anspruch 8, **dadurch gekennzeichnet, dass** die Datenbank neben sensorisch erfassbaren Daten der Vergleichsbauteile insbesondere Informationen über deren Verwendbarkeit enthält, die in praktischen Versuchen ermittelt wurden.

10. Vorrichtung nach Anspruch 8 oder 9, **dadurch gekennzeichnet, dass** die mehreren Sensoren zusätzlich mindestens einen Tastsensor umfassen.

11. Vorrichtung nach einem der Ansprüche 8 bis 10, **dadurch gekennzeichnet, dass** die Vorrichtung weiterhin eine automatisierte Reinigungsvorrichtung (3) umfasst.

12. Vorrichtung nach einem der Ansprüche 8 bis 11, **dadurch gekennzeichnet, dass** der Zuführmechanismus (2) konfiguriert ist, eine große Stückzahl von zu prüfenden Bauteilen in und durch die Vorrichtung zu transportieren.

13. Vorrichtung nach einem der Ansprüche 8 bis 12, **dadurch gekennzeichnet, dass** der Zuführmechanismus (2) und der Sortiermechanismus (9) dazu ausgelegt sind, Bauteile, deren Zustand durch einen Sensor (5, 6, 7) nicht erfassbar ist, nach diesem Sensor auszusortieren.

14. Vorrichtung nach einem der Ansprüche 8 bis 14, **dadurch gekennzeichnet, dass** die Vorrichtung eine Apparatur zur Markierung der der Wiederverwendung zugeführten Bauteile (10) umfasst.

## Claims

1. A method for automated testing of the reusability of components, in particular screws, which comprises the following steps:
sensory detection of a state of a component (S2), wherein the state of the component is described by a plurality of features, the sensory detection being carried out by
optical sensors, which detect the geometric dimensions of the component, external damage or deformation of the component, and/or a state of any coating,
acoustic sensors, which detect damage to the material and the material quality, and
spectrometers, which detect a material composition of the component;
comparison (S3) of the state with the states of comparison components stored in a database;
decision (S4) about a reusability of the component on the basis of the comparison of the state with the states of comparison components stored in a database; and
rejection (S6) or supply for reuse (S8) of the component on the basis of the decision.

2. The method according to claim 1, **characterized in that**, for the comparison of the state of a component with states of comparison components stored in a database, the database contains information about the usability of the comparison components, which was determined in practical tests, in addition to sensory detectable data about the comparison components.

3. The method according to claim 1 or 2, **characterized in that** the sensory detection is additionally carried out by tactile sensors, which detect the geometric dimensions and deformations of the component.

4. The method according to one of the preceding claims, **characterized in that** the component is automatically cleaned (S1) before the sensory detection.

5. The method according to one of the preceding claims, **characterized in that**, in the case that a comparison with states stored in the database is not possible, the component is rejected (S6) and/or is marked for a practical test regarding usability.

6. The method according to one of the preceding claims, **characterized in that**, after the decision about the reusability of the component, the database is expanded (S5) by the sensory detected state of the component.

7. The method according to one of the preceding claims, **characterized in that** a component, which is supplied for reuse, is provided with a marking (S7) for tracking.

8. A device for automated testing of the reusability of components (1), in particular screws, comprising:
a sealed test chamber (4), in which environmental conditions, like lighting and temperature, may be defined,
a supply mechanism (2), via which a component is transported into the test chamber (4) and is transported from one sensor (5, 6, 7) to the next in the same,
multiple sensors (5, 6, 7), by means of which the state of the component is detected, at least one of which is
an optical sensor (5),
an acoustic sensor (6), and
a spectrometer (7),
an evaluation unit (8) which is designed to compare the state of the component with the states of comparison components stored in a database, and
a sorting mechanism (9), via which the evaluated components may be rejected or supplied for reuse.

9. The device according to claim 8, **characterized in that** the database contains, in particular, information about the usability of the comparison components, which was determined in practical tests, in addition to sensory detectable data about the comparison components.

10. The device according to claim 8 or 9, **characterized in that** the multiple sensors additionally comprise at least one tactile sensor.

11. The device according to one of claims 8 to 10, **characterized in that** the device further comprises an automated cleaning device (3).

12. The device according to one of claims 8 to 11, **characterized in that** the supply mechanism (2) is configured to transport a large number of components to be tested into and through the device.

13. The device according to one of claims 8 to 12, **characterized in that** the supply mechanism (2) and the sorting mechanism (9) are designed to reject components, whose state is not detectable by a sensor (5, 6, 7), downstream of this sensor.

14. The device according to one of claims 8 to 14, **characterized in that** the device comprises an apparatus for marking the components supplied for reuse (10).

## Revendications

1. Procédé de test automatisé de la recyclabilité de composants, en particulier de vis, qui comprend les étapes ci-dessous :
détection (S2) par capteur un état d'un composant, l'état du composant étant décrit par une pluralité de caractéristiques, et la détection par capteur étant mise en œuvre grâce à
des capteurs optiques qui enregistrent des dimensions géométriques du composant, des dommages externes ou des déformations du composant et/ou un état d'un quelconque revêtement,
des capteurs acoustiques qui détectent des dommages dans le matériau et la qualité du matériau, et
des spectromètres qui enregistrent une composition matérielle du composant ;
comparaison de l'état avec les états, stockés dans une base de données, de composants de comparaison (S3) ;
décision d'une réutilisabilité du composant (S4) en se basant sur la comparaison dudit état avec les états, stockés dans une base de données, des composants de comparaison ; et
tri (S6) ou fourniture pour réutilisation (S8) du composant sur base de ladite décision.

2. Procédé selon la revendication 1, **caractérisé en ce que**, afin de comparer l'état d'un composant avec des états, stockés dans une base de données, de composants de comparaison, la base de données, en plus des données, enregistrées par capteur, des composants de comparaison, contient des informations sur l'utilisabilité des dits composants, lesquelles informations ont été déterminées lors d'essais pratiques.

3. Procédé selon la revendication 1 ou 2, **caractérisé en ce que** la détection par capteur est mise en œuvre de surcroit grâce à des capteurs tactiles qui détectent les dimensions géométriques et les déformations du composant.

4. Procédé selon l'une quelconque des revendications précédentes, **caractérisé en ce que** le composant est nettoyé (S1) de manière automatique avant la détection par capteur.

5. Procédé selon l'une quelconque des revendications précédentes, **caractérisé en ce que**, si une comparaison avec les états stockés dans la base de données n'est pas possible, le composant est trié (S6) et/ou est marqué en vue d'un essai pratique d'utilisabilité.

6. Procédé selon l'une quelconque des revendications précédentes, **caractérisé en ce que**, après la décision concernant la recyclabilité du composant, la base de données est augmentée (S5) afin d'inclure l'état du composant enregistré par le capteur.

7. Procédé selon l'une quelconque des revendications précédentes, **caractérisé en ce qu'**un composant dirigé vers la réutilisation est muni (S7) d'un marquage de traçabilité.

8. Dispositif de test automatisé de la recyclabilité de composants (1), en particulier de vis, comprenant
une chambre d'essai (4) fermée au sein de laquelle les conditions ambiantes telles que l'éclairage et la température peuvent être déterminées,
un mécanisme d'alimentation (2) par l'intermédiaire duquel un composant est transporté dans la chambre de test (4) et, au sein de celle-ci, est transporté d'un capteur (5, 6, 7) jusqu'au capteur suivant,
plusieurs capteurs (5, 6, 7) grâce auxquels l'état du composant est enregistré, dont au moins
un capteur optique (5),
un capteur acoustique (6), et
un spectromètre (7),
une unité d'évaluation (8) conçue pour comparer l'état du composant avec des états, stockés dans une base de données, de composants de comparaison, et
un mécanisme de tri (9) par l'intermédiaire duquel les composants évalués sont triés ou peuvent dirigés vers la réutilisation.

9. Dispositif selon la revendication 8, **caractérisé en ce que** la base de données, en plus des données, pouvant être enregistrées par capteur, des composants de comparaison, contient en particulier des informations sur l'utilisabilité des dits composants qui ont été déterminées lors d'essais pratiques.

10. Dispositif selon la revendication 8 ou 9, **caractérisé en ce que** la pluralité de capteurs comprend en outre au moins un capteur tactile.

11. Dispositif selon l'une quelconque des revendications 8 à 10, **caractérisé en ce que** le dispositif comprend en outre un dispositif de nettoyage automatisé (3).

12. Dispositif selon l'une quelconque des revendications 8 à 11, **caractérisé en ce que** le mécanisme d'alimentation (2) est configuré pour transporter un grand nombre de composants à tester dans et à travers le dispositif.

13. Dispositif selon l'une quelconque des revendications 8 à 12, **caractérisé en ce que** le mécanisme d'alimentation (2) et le mécanisme de tri (9) sont conçus pour trier, en aval d'un capteur (5, 6, 7), des composants dont l'état ne peut pas être enregistré par ledit capteur.

14. Dispositif selon l'une quelconque des revendications 8 à 14, **caractérisé en ce que** le dispositif comprend un appareil permettant de marquage les composants (10) dirigés vers la réutilisation.
